# EUROPEAN PATENT APPLICATION

(11) **EP 2 889 667 A1**
(43) Date of publication of application: **01.07.2015**
(21) Application number: 13306866.8
(22) Date of filing: 26.12.2013
(51) Int. Cl.: G02B 27/01, G02C 11/00

(54) **Method for determining a gaze direction of virtual image for an optical equipment**

(71) Applicant: ESSILOR INTERNATIONAL (Compagnie Générale d'Optique), 94220 Charenton le Pont (FR)
(72) Inventor: Boiffier, Maxime, 94220 Charenton-le-pont (FR); Callier, Benoit, 94220 Charenton-le-Pont (FR); Reignault, Marc, 94220 Charenton-le-pont (FR)
(74) Representative: Huisman, Aurélien

(57) **Abstract**

The invention relates to a method of determining a gaze direction of virtual image for an optical equipment, said optical equipment comprising a spectacle frame worn by a wearer and an optical lens mounted in the spectacle so that the optical lens is positioned in front of an eye of the wearer when the spectacle frame is worn by the wearer; said optical lens being adapted to transmit to the eye of the wearer a real image and a virtual image, said real image being representative of the scene in front of said optical lens and said virtual image being produced by a display device according to a given field of visualization perceived by the wearer.

According to the invention, the method comprises a step for determining, from at least one information relating to a need of the wearer, a gaze direction of virtual image according to which said virtual image is transmitted to said eye when said virtual image is produced by said display device.

## Description

The invention relates to a method of determining a gaze direction of virtual image for an optical equipment and a computer program product comprising one or more stored sequence of instruction that is accessible to a processor and which, when executed by the processor, causes the processor to carry out the steps of the methods according to the invention.

The discussion of the background of the invention herein is included to explain the context of the invention. This is not to be taken as an admission that any of the material referred to was published, known or part of the common general knowledge at the priority date of any of the claims.

The existing display optical equipment, especially those that enable a see-around or see-trough vision are standard equipment. In other words, such devices provide very few, if any, possibility of adjustments. In particular the display device is adapted for an average user and does not adapt to the user.

As for conventional optical equipment, in particular ophthalmic equipment, each individual user does not have the same visual experience when using a standard display optical device.

For example the information display to the user does not appear at the same location in the visual field for each user.

Typically, an information that is to appear on the side of the visual field may, depending on the user, appear in the center of the visual field or even not appear in the visual field of the user.

Therefore, there is a need for a method for providing a display optical equipment that is better adapted to the user of such equipment.

One object of the invention is to provide a method for determining a gaze direction of virtual image for an optical equipment that does not present the drawbacks mentioned hereinabove.

To this end, the invention proposes a method of determining a gaze direction of virtual image for an optical equipment, said optical equipment comprising a spectacle frame intended to be worn by a wearer and an optical lens mounted in the spectacle so that the optical lens is positioned in front of an eye of the wearer when the spectacle frame is worn by the wearer, said optical lens being adapted to transmit to the eye of the wearer a real image and a virtual image, said real image being representative of the scene in front of said optical lens and said virtual image being produced by a display device according to a given field of visualization perceived by the wearer, characterized in that the method comprises a step for determining, from at least one information relating to a need of the wearer, a gaze direction of virtual image according to which said virtual image is transmitted to said eye when said virtual image is produced by said display device.

Advantageously, the method according to the invention allows determining a virtual gazing direction adapted to the wearer of the optical equipment. The determined virtual gazing direction allows adapting the optical equipment to the needs or parameters of the wearer.

According to further embodiments which can be considered alone or in combination:
- said gaze direction of virtual image is identified relative to a reference gaze direction of the wearer defined in respect with the optical equipment in worn condition; and/or
- the optical lens comprising a mounting cross, said reference gaze direction of the wearer is an axis binding the center of rotation of the eye of the wearer and the mounting cross; and/or
- said gaze direction of virtual image is further determined as a function of an activity of the wearer and/or the type of information presented on the virtual image; and/or
- the at least one information relating to a need of the wearer comprises a preferred gaze direction virtual image directly expressed by said wearer; and/or
- the at least one information relating to a need of the wearer is determined by a step of characterizing at least a need of the wearer in terms of type of information displayed by the virtual image produced by said display device provided on said wearer; and/or
- the at least one information relating to a need of the wearer is determined by a step of characterizing at least one of the need in terms of uses conditions of the optical equipment when said display device produces a virtual image; and/or
- the at least one information relating to a need of the wearer is determined by a step of determining said information in which several gaze positions of the virtual image are provided to the wearer; and/or
- the display device included in the optical equipment comprises at least one element defining the position of the image in the visual field of the wearer; and/or
- said element is an optical waveguide guide and/or a reflective area on the surface of the optical lens and/or a reflective area arranged between the front face and the rear face of the optical lens and/or a diffractive area and/or an emissive area; and/or
- the determination of the optical equipment is performed by proposing to the wearer to select a specific equipment in a set of optical equipment, each of the equipment of the set of equipment being configured to display the virtual image in different gaze directions of virtual image; and/or
- each of the equipment of the set of equipment are configured to display the virtual image in different gaze directions of virtual image along the vertical axis between the primary gaze direction and a gaze direction lowered of 35°; and/or
- each of the equipment of the set of equipment are configured to display the virtual image in different gaze directions of virtual image along the vertical axis between the primary gaze direction and a gaze direction raised of 15°; and/or
- each of the equipment of the set of equipment are configured to display the virtual image in different gaze directions of virtual image along the horizontal axis between the reference direction and a gaze direction offset toward the temple of the wearer up to 50°; and/or
- each of the equipment of the set of equipment are configured to display the virtual image in different gaze directions of virtual image along the horizontal axis between the reference direction and a gaze direction offset toward the nose of the wearer up to 30°.

According to a further aspect, the invention relates to a computer program product comprising one or more stored sequence of instruction that is accessible to a processor and which, when executed by the processor, causes the processor to carry out the steps of the methods according to the invention.

According to another aspect the invention relates to a program which makes a computer execute the method of the invention.

The invention also relates to a computer readable medium carrying one or more sequences of instructions of the computer program according to the invention.

The invention further relates to a computer-readable storage medium having a program recorded thereon; where the program makes the computer execute the method of the invention.

The invention relates to a device comprising a processor adapted to store one or more sequence of instructions and to carry out at least one of the steps of a method according to the invention.

Elements in the figures are illustrated for simplicity and clarity and have not necessarily been drawn to scale. For example, the dimensions of some of the elements in the figure may be exaggerated relative to other elements to help improve the understanding of the embodiments of the present invention.

Non limiting embodiments of the invention will now be described with reference to the accompanying drawing wherein:

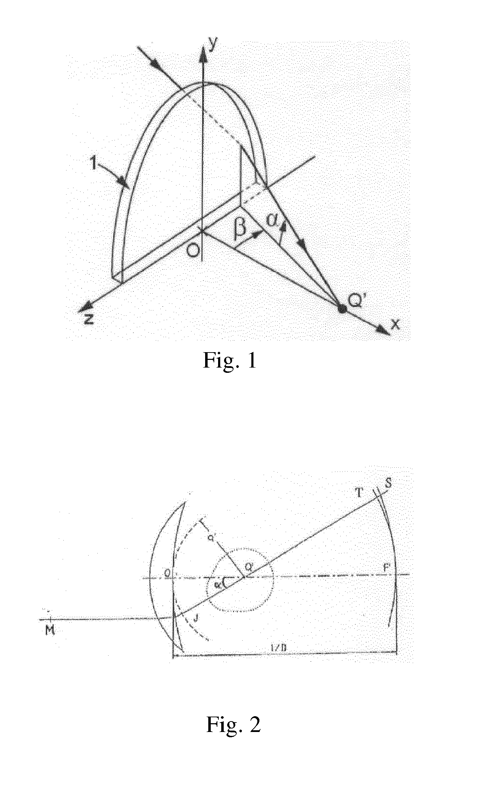

Figures 1 and 2 are schematic representation of an optical system of an eye and an optical lens.

The invention relates to a method of determining a gaze direction of virtual image for an optical equipment adapted for a wearer.

According to an embodiment of the invention, the gaze direction of virtual image is defined relative to a reference gaze direction of the wearer, for example the primary gaze direction of the wearer.

Figures 1 and 2 are diagrammatic illustrations of optical systems of eye and optical lens, thus showing the definitions used in the description.

More precisely, figure 1 represents a perspective view of such a system illustrating parameters α and β that may be used to define a gaze direction.

Figure 2 is a view in the vertical plane parallel to the antero-posterior axis of the wearer's head and passing through the center of rotation of the eye in the case when the parameter β is equal to 0.

The center of rotation of the eye is labeled Q'. The axis Q'F', shown on Figure 2 in a dot-dash line, is the horizontal axis passing through the center of rotation of the eye and extending in front of the wearer - that is the axis Q'F' corresponding to the primary gaze direction.

An apex sphere, of center Q', and of radius q', is tangential to the rear surface of the lens in a point of the horizontal axis. For example, a value of radius q' of 25.5 mm corresponds to a usual value and provides satisfying results when wearing optical lenses.

On the particular example shown on fig. 2 the rear face is spherical and no pantoscopic angle is considered. For different case, apex sphere is not tangential to the rear surface.

FIG. 2 shows a diagram of an eye-and-lens optical system in a side view, and shows the definitions used hereafter in the description. The centre of rotation of the eye is called Q'. The position of the centre of rotation of the eye Q' with respect to the optical equipment in worn condition can be determined as the intersection point between the gaze directions. The axis Q'F' represented in the figure by a chain-dotted line is the horizontal axis passing through the centre of rotation of the eye and continuing in front of the wearer-in other words the axis Q'F' corresponds to the primary viewing direction.

This axis cuts, on the front face, a point on the lens called the fitting cross FC, which is marked on the lenses in order to allow their positioning by an optician. The optician can put a mark on the lens when the wearer wears the optical equipment. This axis cuts, on the rear face, a point O on the lens. Let point O be the point of intersection of the rear face and tins axis Q'F'.

A given gaze direction, represented by a solid line on figure 1, corresponds to a position of the eye in rotation around Q' and to a point J of the apex sphere.

The angle β is the angle formed between the axis Q'F' and the projection of the straight line Q'J on the horizontal plane comprising the axis Q'F'; this angle appears on the scheme on Figure 1.

The angle α is the angle formed between the axis Q'J and the projection of the straight line Q'J on the horizontal plane comprising the axis Q'F'; this angle appears on the scheme on Figures 1 and 2.

A given gaze direction thus corresponds to a point J of the apex sphere or to a couple (α, β). The more the value of the lowering gaze angle is positive, the more the gaze is lowering and the more the value is negative, the more the gaze is rising.

FIG. 2 shows the position of the eye and of the reference frame linked to the eye, in the principal viewing direction, α = β = 0, called the primary viewing direction. In this particular direction, the points J and O thus coincide.

The fitting cross of the lens can be geometrically marked on the lens by a cross or any other mark such as a point surrounded by a circle produced on the front side of the lens, also named "object-side", or by any other appropriate means; this is a centering point produced on the lens which is used by the optician to fit the lens in the frame. In spherical coordinates, the fitting cross has the coordinates (0, 0) as it corresponds to the point of intersection of the front face of the lens and the primary viewing direction, as defined previously.

According to an embodiment of the invention, the display device included in the optical equipment comprises at least one element defining the position of the image in the visual field of the wearer.

Said element may be one of or a combination of :
- an optical waveguide guide,
- a reflective area on the surface of the optical lens,
- a reflective area arranged between the front face and the rear face of the optical lens,
- a diffractive area,
- an emissive area.

Typically an optical equipment that may be adapted using a method of the invention comprises a spectacle frame and an optical lens mounted in the spectacle frame. The optical lens is mounted in the spectacle frame so that when the optical equipment is worn by a wearer the optical lens is placed in front of an eye of the wearer.

The optical lens is adapted to transmit to the eye of the wearer, when the optical equipment is worn by the wearer, a real image representative of the scene in front of the optical lens.

The optical lens is further adapted to transmit to the eye of the wearer, when the optical equipment is worn by the wearer, a virtual image produced by a display device according to a given field of visualization perceived by the wearer.

The method according to the invention comprises a step of determining a gaze direction of virtual image according to which the virtual image is transmitted to the eye of the wearer when produced by the display device. The gaze direction of virtual image being determined according to at least one information relating to a need of the wearer. The gaze direction may be defined by a couple (αᵥ, βᵥ) with αᵥ and βᵥ determined values of the angles defined in figure 1.

According to an embodiment of the invention the gaze direction of virtual image may be determined according to the type of information to be displayed to the wearer.

For example, if the information to be displayed is a rough visual type information such as an alert message or symbols, the wearer does not require to stare in the direction of the displayed information over a long period of time. Therefore the virtual image may be displayed in the periphery of the visual field of the wearer.

As an example, alert message indicating to the wearer that battery power is low or that the wearer received an email, or information requiring only a short look to be understood, like sms, can be displayed in the periphery of the real field of view and let free of any virtual image the central field of view of the wearer. The real field of view gathers all the gaze direction of the wearer traversing the optical lens.

If the information to be displayed is information requiring that the wearer stares at the information over a long period of time, for example displaying text, images or video, the displayed information should be displayed in an area closed to the primary gaze direction.

If the information to be displayed is enhanced reality information, the virtual image should be displayed in the direction of the element of the scene being looked by the wearer.

According to an embodiment of the invention the gaze direction of virtual image may be determined according to the type of activity being carried out by the wearer when wearing the optical device.

For example if the optical equipment is to be used during specific occupational activity, the virtual image should be displayed so as to appear preferably in the lower part of the optical lens.

For example during reading activity, to propose to the wearer an image enhancement, a contrast adjustment, a display of definition of words in text that is been read. Since the visual image is located in the bottom part of the lens, this avoid continuous vertical movement of the eyes to see the real image of the text and the virtual image, that would lead to eye stress. Preferably, the virtual image may be is positioned on a temporal side, so as to reduce the size or visibility of the element defining the position of the virtual image.

Another example is for golfing, for which the wearer will need to have specific information, like the wind speed, the distance to the hole, and at the same time look at the ball using the lower part on the lens.

If the optical equipment is to be used for far vision activity, such as driving or walking, the virtual image should be displayed preferably around the part of the optical lens used by the wearer for primary gaze direction.

For example, the virtual image is used to highlight traffic signal, roadsigns, pedestrians, coming cars, it is necessary that these information are provided at least at the same vertical position on the lens as the primary gaze direction to avoid the wearer to look down or up to see these information. This prevents the wearer from changing his/her gazing direction to get the information, and so reduces the risk of car accident.

This information can be nevertheless displayed on a lateral side so as to keep the central field of view free of virtual image and so keep the best real image for the primary gaze direction.

If the optical equipment is to be used for general activity, that may comprise near, far and intermediate distance vision, the optical equipment may be design to display the virtual image between 0° and 20° below the primary gaze direction and offset toward the temple of the wearer between 0° and 20°. These angular preference regions are defined for improving the wearer comfort.

The type of activity carried out by the wearer when using the optical equipment may be determined by having the wearer fill out a form or using a specific equipment determining the activities of the wearer. This activity determination is performed for determining a dedicated gaze direction for virtual image display.

According to an embodiment of the invention, the gaze direction of virtual image may be determined according to the preferences of the wearer. For example, the wearer may have an occasional use of the virtual image, and may prefer that the virtual image are displayed in lateral zone, so as to keep free the real image in his/her central field of view. Indeed, even for see through optical equipment, the brightness and contrast of the real image in the gaze direction corresponding to the virtual image will be reduced. This can lead to unacceptance for the wearer that would prefer to have a clear real image for his/her current gazing. In addition, the difference of contrast and/or brightness between the right/left eyes can also lead to unacceptance to the wearer when wearing an equipment that displays virtual image on a single eye only.

According to an embodiment of the invention the gaze direction of virtual image may be determined by using a specific device allowing adapting the gaze direction of virtual image. Therefore the wearer may try several gaze direction of virtual image and select the one he prefers.

For example, such a device is an optical equipment providing a very broad virtual image field of view. This device can be programmed so as to display a reduced size image corresponding to a narrow part of the virtual image field of view. The location of the reduced size image can be selected and changed within the virtual image field of view. Then the wearer can try different locations, and finally decides which one is the best fit for him/her.

According to an embodiment of the invention the gaze direction of virtual image may be determined by providing a set of optical equipment.

Each optical equipment of the set of optical equipment is adapted to display the virtual image with different gaze direction of virtual image. The wearer may determine the most adapted gaze direction of virtual image by trying the different optical equipment of the set.

For example, each of the equipment of the set of equipment are configured to display the virtual image in different gaze directions of virtual image along the vertical axis between the primary gaze direction and a gaze direction lowered of 35 °.

Alternatively, each of the equipment of the set of equipment are configured to display the virtual image in different gaze directions of virtual image along the vertical axis between the primary gaze direction and a gaze direction raised of 15 °.

The invention has been described above with the aid of embodiments without limitation of the general inventive concept.

Many further modifications and variations will suggest themselves to those skilled in the art upon making reference to the foregoing illustrative embodiments, which are given by way of example only and which are not intended to limit the scope of the invention, that being determined solely by the appended claims.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. A method of determining a gaze direction of virtual image for an optical equipment, said optical equipment comprising a spectacle frame intended to be worn by a wearer and an optical lens mounted in the spectacle so that the optical lens is positioned in front of an eye of the wearer when the spectacle frame is worn by the wearer, said optical lens being adapted to transmit to the eye of the wearer a real image and a virtual image, said real image being representative of the scene in front of said optical lens and said virtual image being produced by a display device according to a given field of visualization perceived by the wearer, the method comprises a step for determining, from at least one information relating to a need of the wearer, a gaze direction of virtual image according to which said virtual image is transmitted to said eye when said virtual image is produced by said display device.

2. The method of claim 1, wherein said gaze direction of virtual image is identified relative to a reference gaze direction of the wearer defined in respect with the optical equipment in worn condition.

3. The method of claim 2, the optical lens comprising a mounting cross, wherein said reference gaze direction of the reference of the wearer is an axis binding the center of rotation of the eye of the wearer and the mounting cross.

4. The method according to one of the preceding claims, wherein said gaze direction of virtual image is further determined as a function of an activity of the wearer and/or the type of information presented on the virtual image.

5. The method according to one of claims 1 to 4, wherein the at least one information relating to a need of the wearer comprises a preferred gaze direction virtual image directly expressed by said wearer.

6. The method according to one of the preceding claims, wherein the at least one information relating to a need of the wearer is determined by a step of characterizing at least a need of the wearer in terms of type of information displayed by the virtual image produced by said display device provided on said wearer.

7. The method according to one of the preceding claims, wherein the at least one information relating to a need of the wearer is determined by a step of characterizing at least one of the need in terms of uses conditions of the optical equipment when said display device produces a virtual image.

8. The method according to one of the previous claims, wherein the at least one information relating to a need of the wearer is determined by a step of determining said information in which several gaze positions of the virtual image are provided to the wearer.

9. The method according to one of the preceding claims, wherein the display device included in the optical equipment comprises at least one element defining the position of the image in the visual field of the wearer.

10. The method according to the preceding claim, wherein said element is an optical waveguide guide and/or a reflective area on the surface of the optical lens and/or a reflective area arranged between the front face and the rear face of the optical lens and/or a diffractive area and/or an emissive area.

11. The method according to one of the preceding claims wherein the determination of the optical equipment is performed by proposing to the wearer to select a specific equipment in a set of optical equipment, each of the equipment of the set of equipment being configured to display the virtual image in different gaze directions of virtual image.

12. The method according to claim 11, wherein each of the equipment of the set of equipment are configured to display the virtual image in different gaze directions of virtual image along the vertical axis between the reference direction and a gaze direction lowered of 35°.

13. The method according to claim 11, wherein each of the equipment of the set of equipment are configured to display the virtual image in different gaze directions of virtual image along the vertical axis between the reference direction and a gaze direction raised of 15°.

14. The method according to claim 11, wherein each of the equipment of the set of equipment are configured to display the virtual image in different gaze directions of virtual image along the horizontal axis between the reference direction and a gaze direction offset toward the temple of the wearer up to 50°.

15. The method according to claim 11, wherein each of the equipment of the set of equipment are configured to display the virtual image in different gaze directions of virtual image along the horizontal axis between the reference direction and a gaze direction offset toward the nose of the wearer up to 30°.
